# EUROPEAN PATENT APPLICATION

(11) **EP 1 538 823 A1**
(43) Date of publication of application: **08.06.2005**
(21) Application number: 04257340.2
(22) Date of filing: 26.11.2004
(51) Int. Cl.: H04N 1/21

(54) **Image taking apparatus and method of displaying thumbnails of images taken under the same setting**

(30) Priority: 01.12.2003 JP 2003401400
(71) Applicant: SONY CORPORATION, Tokyo 141 (JP)
(72) Inventor: Suzuki, Yasufumi c/o Sony Corportion, Tokyo (JP)
(74) Representative: Nicholls, Michael John

(57) **Abstract**

An image taking apparatus of the present invention comprises thumbnail generating means (120) for generating thumbnails created based on image data, identifier setting means (140) for setting identifier information added to associate the thumbnails with the image data, identifier information adding means (140) for adding such identifier information capable of determining the image data and the thumbnails as obtained under the same setting to the image data captured when specific setting information is configured and to the thumbnails based on the setting information, data recording means (180) for recording the image data and the thumbnails, data reading means (180) for reading, when more than one thumbnail have the same identifier information, only one thumbnail that is selected based on a predetermined condition from the thumbnails having the same identifier information, and screen display means (130) for generating thumbnail list screen data from thumbnails read by the data reading means.

## Description

### CROSS REFERENCE TO RELATED APPLICATION

This application claims priority from Japanese Priority Document No. 2003-401400, filed on Dec. 1, 2003 with the Japanese Patent Office, which document is hereby incorporated by reference.

### BACKGROUND OF THE INVENTION

### 1. Field of the Invention

The present invention relates to an image taking apparatus. Particularly, the present invention relates to an image taking apparatus that has an improved operability during inspecting and/or searching of data recorded on a recording medium or the like.

### 2. Description of Related Art

In an conventional technology, some image taking apparatuses have functions of taking moving pictures besides still images, and recording speech, and other image taking apparatuses have various functions including a successive still picture imaging function in which an object can be taken successively, and an auto-bracket function in which such successive still picture imaging can be performed, while varying exposures, by operating a shutter button only once.

In the above-mentioned image taking apparatuses, it is arranged that data such as still images taken are sequentially recorded on a recording medium such as a memory card, that when inspecting and/or searching the data recorded on the recording medium, a list of size-reduced image data (hereinafter, thumbnails) generated in accordance with the respective data is displayed, and that when a user selects a desired thumbnail from these thumbnails, the data corresponding to the selected thumbnail is read from the recording medium for reproduction and/or display.

However, if the number of data for recording on the recording medium increases, the process of inspecting and searching the data becomes cumbersome. Further, when recording image data successively taken using the successive still picture imaging function or the auto-bracket function, it becomes necessary to store and/or manage information such as their imaged time sequential order. Thus, various methods have been devised to classify and/or process data for recording on a recording medium.

For example, an apparatus has been proposed, which is capable of performing rearrangement, processing of a plurality of successively taken image data quickly, by recording the image data under a file name composed of characters indicating which group the image data belongs to, an English character labeled in an order within each group, and characters indicating a file number arranged in an imaged order, to allow the belonging group, the order in which the data is generated, and stored, and the like in respect of the image data to be judged only from the file name (see, e.g., Patent Document 1: Unexamined Japanese Patent Application Publication No. 11-261937).

However, when inspecting and/or searching image data and the like recorded on a recording medium by an image taking apparatus such as mentioned above, screen images are sequentially displayed, each of which shows a list of thumbnails read according to a predetermined order of, e.g., data recording date and time information, file names, or file numbers. Since the number of thumbnails displayable on a single screen in a list form is fixed, a problem is addressed that the number of operations for switching screen images required increases when increasing the volume of data.

Further, successively taken image data, image data taken during a time period from the power of an apparatus being turned on to its being turned off, and the like are generally so highly analogous that they are less necessary to be displayed on a list screen, and that they are often hard to be distinguished when displayed as a list of thumbnails. Thus, to display on screen all thumbnails including even such thumbnails would reduce visibility, further deteriorate operability during the inspecting and/or searching of data.

Therefore, the invention has the problem to be solved, which is to improve visibility and operability during inspecting and/or searching of data recorded on a recording medium or the like by an image taking apparatus.

### SUMMARY OF THE INVENTION

In order to solve the above problem, an image taking apparatus according to the invention is configured as follows.

An image taking apparatus is characterized by including thumbnail generating means capable of generating thumbnails that are size-reduced image data created in accordance with image data captured via imaging means, identifier setting means for setting identifier information added to associate the thumbnails generated by the thumbnail generating means with the image data, identifier information adding means capable of adding, when the identifier information set by the identifier setting means is to be added to the image data and the thumbnails generated by the thumbnail generating means, such identifier information as to allow the image data and the thumbnails to be determined as obtained under the same configuration to the image data captured when specific setting information is configured and to the thumbnails based on the setting information of the image taking apparatus, data recording means capable of recording the image data and the thumbnails to which the identifier information is added, on a recording medium, data reading means capable of reading by selecting, when the thumbnails are read from the recording medium, only a thumbnail that is based on a predetermined condition from the thumbnails to which such identifier information as to allow the image data and the thumbnails to be determined as obtained under the same configuration is added, and screen display means capable of generating thumbnail list screen data from a predetermined number of thumbnails read by the data reading means, for display on a screen.

The image taking apparatus of the present invention is further characterized in that the screen display means generates the thumbnail list screen data by performing a predetermined graphic process only on the thumbnail read by selection by the data reading means.

The image taking apparatus of the present invention is further characterized in that the identifier adding means adds such identifier information as to allow the image data and the thumbnails to be determined as obtained under the same setting to the image data captured when a successive still picture imaging function or an auto-bracket function is configured as the specific setting information and to the thumbnails.

The image taking apparatus of the present invention is still further characterized in that the identifier information adding means adds, to the image data captured when a specific one of imaging mode information items that are defined according to predetermined imaging conditions is configured as the specific setting information and to the thumbnails, such identifier information as to allow the image data and the thumbnails to be determined as obtained under the same setting.

The image taking apparatus of the present invention is still further characterized in that the identifier adding means adds such identifier information as to allow the image data and the thumbnails to be determined as obtained under the same setting to the image data captured from the turning on to the turning off of a specific operation switch when information indicating that the specific operation switch is designated is configured as the specific setting information and to the generated thumbnails.

In the image taking apparatus having such as this configuration, image data captured when specific setting information is configured and thumbnails generated in accordance with the image data are recorded on a recording medium with such identifier information as to allow the image data and the thumbnails to be determined, based on the setting information of the apparatus, as obtained under the same setting added when the identifier adding means adds identifier information to the image data and the thumbnails.

And when the data reading means reads the thumbnails based on their identifier information, if there are thumbnails to which such identifier information as to allow the thumbnails to be determined as obtained under the same setting is added, the data reading means reads by selection therefrom only a thumbnail that is based on a predetermined condition, and further, the screen display means performs a predetermined graphic process only on the thumbnail read by the data reading means selectively. As a result, among the thumbnails generated in accordance with the image data taken when the specific setting information is configured, only a representing thumbnail is displayed in a list, whereby the visibility and the operability of a thumbnail list screen used to inspect and/or search data recorded on the recording medium can be improved.

In the image taking apparatus of the present invention, image data captured when specific setting information is configured or specific operation is performed, such as when successive imaging is performed using, e.g., the successive still picture imaging function or the auto-bracket function, or when a desired imaging mode is set, or during a time period from the power switch of the apparatus being turned on to its being turned off, and thumbnails generated in accordance with the image data are recorded on a recording medium with such identifier information, e.g., the same ID number, as to allow them to be determined as obtained under the same setting.

And when data on the recording medium are inspected and/or searched in the image taking apparatus, if there are thumbnails to which such identifier information as to allow them to be determined as obtained under the same setting is added, only a representing thumbnail is read therefrom, and this thumbnail is subjected to a graphic process to generate a thumbnail list screen for display, whereby a single thumbnail is displayed as representing the image data taken during a period in which the specific setting information is configured.

For example, thumbnails that are highly analogous and hard to be distinguished, such as the thumbnails of successively taken image data, are displayed as a single thumbnail, and further, the single thumbnail is displayed while subjected to a predetermined graphic process such that it can be visually recognized that the single thumbnail is associated with the other successively taken image data. As a result, superior advantages that the visibility of a thumbnail list screen is improved without displaying all the thumbnails, and that the number of screen switching operations is reduced for efficient inspecting and/or searching of the data can be obtained.

Next, an embodiment of the present invention, which is an image taking apparatus, will be described with reference to the drawings. However, the drawings are only for purposes of explanation, and thus are not construed to limit the technical scope of the present invention.

### BRIEF DESCRIPTION OF THE DRAWINGS

FIG. 1 is a block diagram showing, in a simplified form, the internal configuration of an image taking apparatus according to the claimed invention;
FIG. 2 is a flowchart showing operations performed by the image taking apparatus of FIG. 1 when image data taken and their thumbnails are recorded on a recording medium;
FIG. 3 is an explanatory diagram showing, in a simplified form, thumbnails (image data) recorded on a recording medium by a conventional image taking apparatus;
FIG. 4 is an explanatory diagram showing, in a simplified form, thumbnails (image data) recorded on a recording medium by the image taking apparatus of FIG. 1;
FIG. 5 is a flowchart showing an operation performed by the image taking apparatus of FIG. 1 when image data (thumbnails) recorded on a recording medium are inspected and/or searched; and
FIG. 6 is an explanatory diagram showing, in a simplified form, how a thumbnail list screen is displayed when the image data (thumbnails) recorded based on the flowchart of FIG. 5 are inspected and/or searched.

### DETAILED DESCRIPTION OF THE PREFERRED EMBODIMENTS

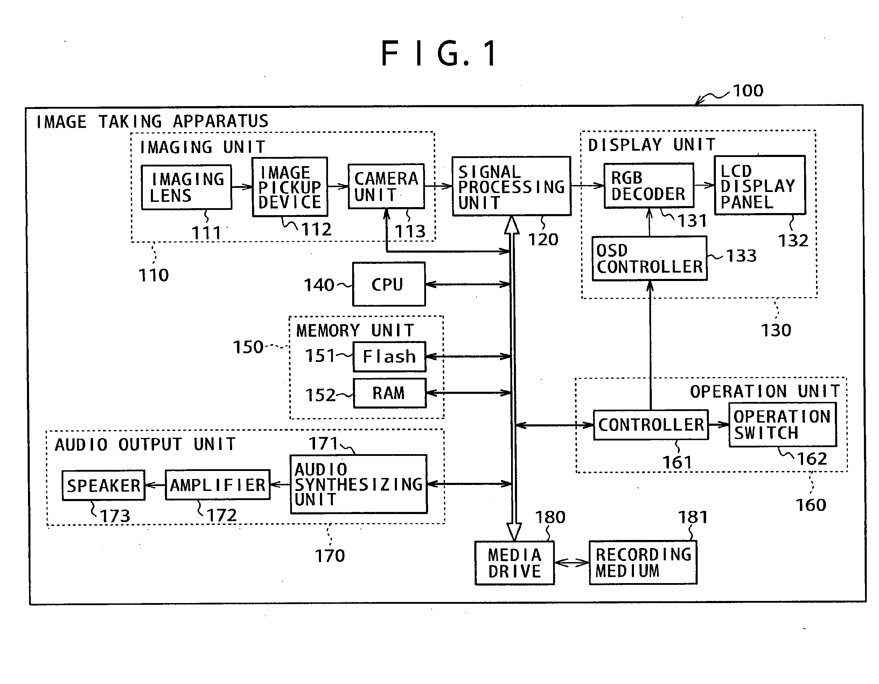

FIG. 1 is a block diagram showing, in a simplified form, the internal configuration of an image taking apparatus 100 that has a successive still picture imaging function in which an image can be taken successively by operating the shutter button only once, an auto-bracket function in which a plurality of images with different exposures respectively can be successively taken by operating the shutter button only once, and the like. The image taking apparatus 100 includes an imaging unit 110, a signal processing unit 120, a display unit 130, a CPU (Central Processing Unit) 140, a memory unit 150, an operation unit 160, an audio output unit 170, and a media drive 180.

The imaging unit 110 has an imaging lens 111, an image pickup device 112, a camera unit 113, and the like, converts an image (optical signal) taken by the image pickup device 112 via the imaging lens 111 into an electrical signal, and further converts the converted electrical signal by the camera unit 113 into a digital signal for supply to the signal processing unit 120 in accordance with a control signal from the CPU 140.

Further, the imaging unit 110 successively takes an image at predetermined time intervals or successively takes a plurality of images with different exposures respectively, and sequentially converts the respective successively taken images into digital signals for supply to the signal processing unit 120, by operating a predetermined operation switch 162 (shutter button) only once, when the successive still picture imaging function or the auto-bracket function is turned on.

The signal processing unit 120 performs a predetermined signal process such as a process of correcting the digital signal supplied from the imaging unit 110, and supplies the thus signal-processed digital signal (hereinafter, image data) to the display unit 130 and the media drive 180 in accordance with a control signal from the CPU 140.

The display unit 130 has an RGB decoder 131, an LCD (Liquid Crystal Display) display panel 132, an OSD (On Screen Display) controller 133, and the like, converts the image data supplied from the signal processing unit 120 by the RGB decoder 131 for display on the LCD display panel 132 in accordance with a control signal from the CPU 140, and displays by the OSD controller 133 by superimposing predetermined textual data, graphic data, and the like on the LCD display panel 132 in response to an instruction from the operation unit 160.

The CPU 140 outputs control signals for controlling various parts of the image taking apparatus 100 and performs logical operations on various data exchanged within the apparatus 100 in accordance with pre-stored programs and data.

Further, the CPU 140 configures identifier information added for management of image data and the like, e.g., an ID number (hereinafter referred to as an ID number), and controls the signal processing unit 120 to generate size-reduced image data (hereinafter, thumbnail) that is based on image data captured via the imaging unit 110 and add a configured predetermined ID number to the image data and its thumbnail to associate them with each other.

In this case, when specific setting information is configured, or when a specific operation is performed to image data to be captured and to their thumbnails based on setting information such as an imaging mode or various configurations, an ID number which allow to be determined as obtained under the same setting, e.g., the same number (hereinafter, the same ID number) is added.

The same ID number is added to image data captured when specific setting information is configured and to their thumbnails to be generated in accordance with the image data, such as when the successive still picture imaging function or the auto-bracket function is set to on, or a specific imaging mode information item designated by selection from imaging mode information items (e.g., a portrait mode, a night scene mode, and the like) is set, or during a time period from a specific switch such as the power switch of the image taking apparatus 100 being turned on to its being turned off.

And the CPU 140 controls the media drive 180 to record data such as ID number-added image data and thumbnails on a recording medium 181, or to read the data such as the image data and thumbnails recorded on the recording medium 181 for supply to a predetermined circuit block within the image taking apparatus 100.

Note that to read the image data and thumbnails recorded on the recording medium 181, the thumbnails are read based on the order of the ID numbers added thereto, and when there are thumbnails having the same ID number added thereto, only a thumbnail is read, which is selected from the corresponding thumbnails based on a predetermined condition (the time they are recorded on the recording medium or the like).

The memory unit 150 includes a nonvolatile memory, e.g., a flash memory 151 for storing ID numbers generated by the CPU 140, a memory such as a RAM (Random Access Memory) 152, and performs processes of reading and/or writing various data according to control signals from the CPU 140.

The operation unit 160 includes operation switches 162, and a controller 161, and when the operation switch 162 is operated, the controller 161 supplies an operation signal corresponding to the operation switch 162 to a predetermined circuit block within the image taking apparatus 100.

The audio output unit 170 includes an audio synthesizing unit 171, an amplifier 172, a speaker 173, and reads audio data and the like recorded on the recording medium 181 or the like for reproduction in accordance with a control signal from the CPU 140.

The media drive 180 writes or records various data, such as image data, thumbnails, audio data, moving picture data, on the configured recording medium 181 (e.g., a magnetic tape, an optical disc, a memory card, or the like), and also reads the various data recorded on the recording medium 181 for supply to a predetermined circuit block within the image taking apparatus 100 in accordance with control signals from the CPU 140.

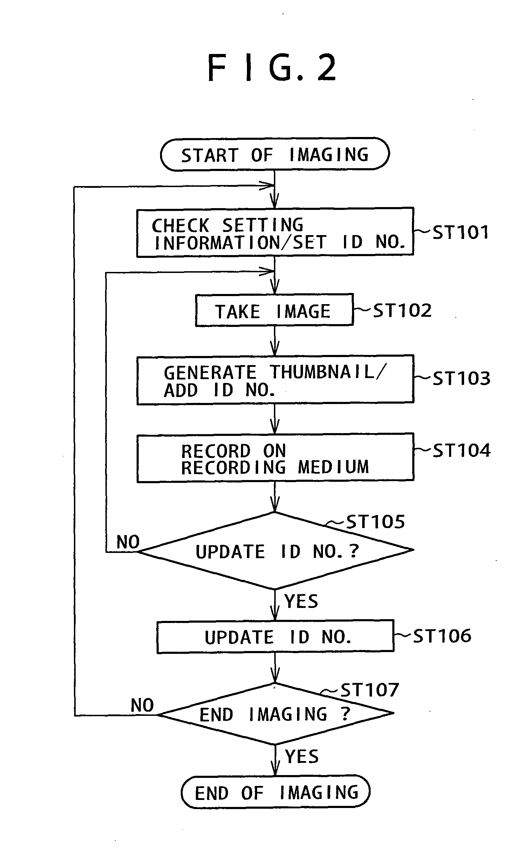

Successively, referring to a flowchart of FIG. 2, operations will be described, which are performed by the image taking apparatus 100 shown in FIG. 1 to record captured image data on a recording medium 181.

First, an operation will be described, which is performed to add the same ID number when specific setting information, e.g., a successive imaging mode (the successive still picture imaging function, the auto-bracket function, or the like is turned on) is configured.

When imaging is started, the CPU 140 checks setting information such as an imaging mode or various configurations to set the image taking apparatus 100 to a predetermined state "successive imaging mode". And based on ID number(s) recorded on the flash memory 151 of the memory unit 150, the CPU 140 sets or initializes a predetermined ID number to be added to image data now to be taken (ST101).

Successively, the image taking apparatus 100 becomes ready to take an image, and when the shutter button is operated by a user, the image (an optical signal) supplied via the imaging unit 110 is processed by the signal processing unit 120 to be captured as image data in accordance with a control signal from the CPU 140 (ST102).

Next, the signal processing unit 120 generates a thumbnail in accordance with the captured image data, and the CPU 140 adds the predetermined ID number to the captured image data and the generated thumbnail (ST103).

Successively, the CPU 140 controls the media drive 180 to record the image data and the thumbnail to which the ID number is added, on the recording medium 181 arranged to the media drive 180 (ST104).

Next, the CPU 140 determines whether or not the ID number should be updated based on the setting information (ST105).

Since the successive imaging mode is configured as the setting information here, whether the ID number should be updated is determined by the number of successive imaging operations.

If the ID number is not to be updated, i.e., if the number of imaging operation does not reach a predetermined number here, then the process moves to an operation of imaging a next image (successive imaging) without updating the ID number (ST105 → ST102).

And until the condition is satisfied for updating the ID number (until the number of imaging operation reaches a predetermined number), the process repeats the above-mentioned steps between ST102 and ST105 to add the same ID number to captured image data and thumbnails to be generated in accordance with these image data, for recording on the recording medium 181.

When the condition for updating the ID number is satisfied, i.e., when the successive imaging is performed the predetermined number of times, the CPU 140 generates a new ID number to be added to image data to be taken next and its thumbnail, for recording on the flash memory 151 or the like of the memory unit 150 (ST105 → ST106).

Next, the CPU 140 determines whether or not it will end the image taking (ST107).

In case of continuing the image taking, the process returns to the above-mentioned step ST101 to start a new round of image taking operations (ST107 → ST101 → ...).

To end the image taking, a series of image taking operations is brought to an end (ST107 → End).

On the other hand, a case will be described, in which specific setting information is not set, e.g., a normal imaging mode (hereinafter, the normal mode), in which a single image is taken by operating the shutter button once, is configured.

When imaging is started, the CPU 140 checks setting information such as an imaging mode or various settings to configure the apparatus to a predetermined state "normal mode". And based on ID number(s) recorded on the flash memory 151 of the memory unit 150, the CPU 140 sets or initializes a predetermined ID number to be added to image data now to be taken (ST101).

Successively, the image taking apparatus 100 becomes ready to take an image, and when the shutter button is operated by a user, the image (an optical signal) supplied via the imaging unit 110 is processed by the signal processing unit 120 to be captured as image data, according to a control signal from the CPU 140 (ST102).

Next, the signal processing unit 120 generates a thumbnail in accordance with the captured image data, and the CPU 140 adds the predetermined ID number to the captured image data and the generated thumbnail (ST103).

Successively, the CPU 140 controls the media drive 180 to record the image data and the thumbnail to which the ID number is added, on the recording medium 181 set (ST104).

Next, the CPU 140 determines whether or not the ID number should be updated based on the setting information (ST105).

Since the normal mode is set as the setting information here, and thus there is no need to add the same ID number, the CPU 140 generates a new ID to be added to image data to be taken next and its thumbnail, for recording on the flash memory 151 or the like of the memory unit 150 (ST105 → ST106).

Next, the CPU 140 determines whether or not it will end the image taking (ST107).

In case of continuing the image taking, the process returns to the above-mentioned step ST101 to start a new round of image taking operations (ST107 → ST101 → ...).

To end the image taking, a series of image taking operations is brought to an end (ST107 → End).

Next, image data and their thumbnails to be recorded based on the flowchart of FIG. 2 will be described.

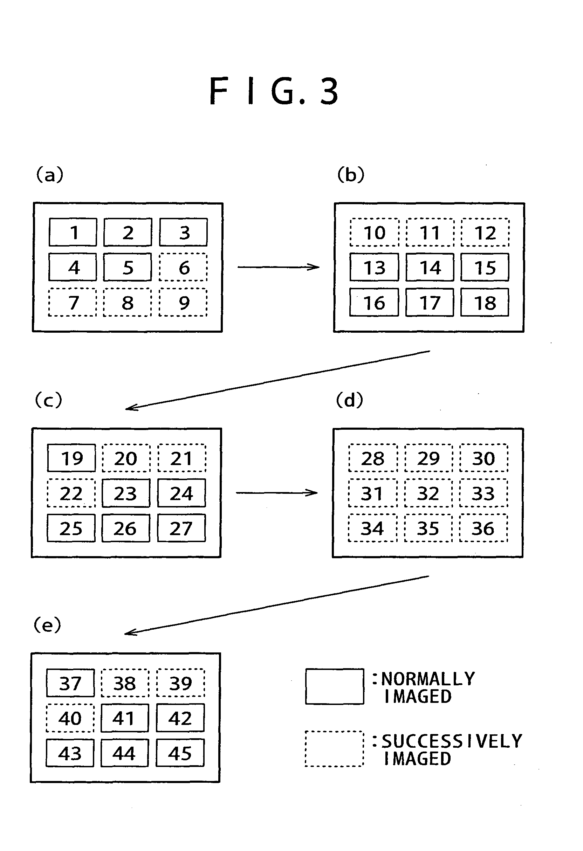

In the conventional image taking apparatus, image data and their thumbnails are recorded and/or managed based on a predetermined order of, e.g., imaged dates and times or file names. For example, as shown in FIG. 3, image data and their thumbnails are recorded and/or managed by serial numbers "1" to "45".

Note that data each shown by a dotted line in FIG. 3 indicate successively taken image data or thumbnails, with Nos. "6" to "12", Nos. "20" to "22", Nos. "28" to "36", and Nos. "38" to "40" corresponding to successively taken image data and their thumbnails.

On the other hand, in the image taking apparatus 100 of the present invention, image data to be captured when specific setting information is configured or when a specific operation is performed, and their thumbnails are recorded on a recording medium 181 with the same ID number added thereto based on the setting information.

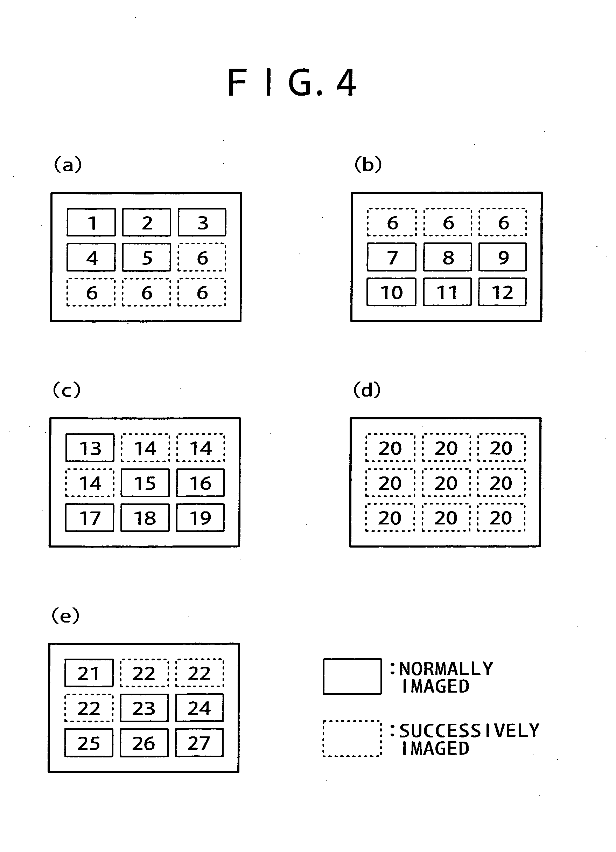

For example, as shown in FIG. 4, as to ID numbers "1" to "27" added as serial numbers, the same ID number is added to data for recording on a recording medium, with an ID number "6" added to data corresponding to the numbers "6" to "12" of FIG. 3, an ID number "14" to data corresponding to the numbers "20" to "22" of FIG. 3, an ID number "20" to data corresponding to the numbers "28" to "36" of FIG. 3, and an ID number "22" to data corresponding to the numbers "38" to "40" of FIG. 3.

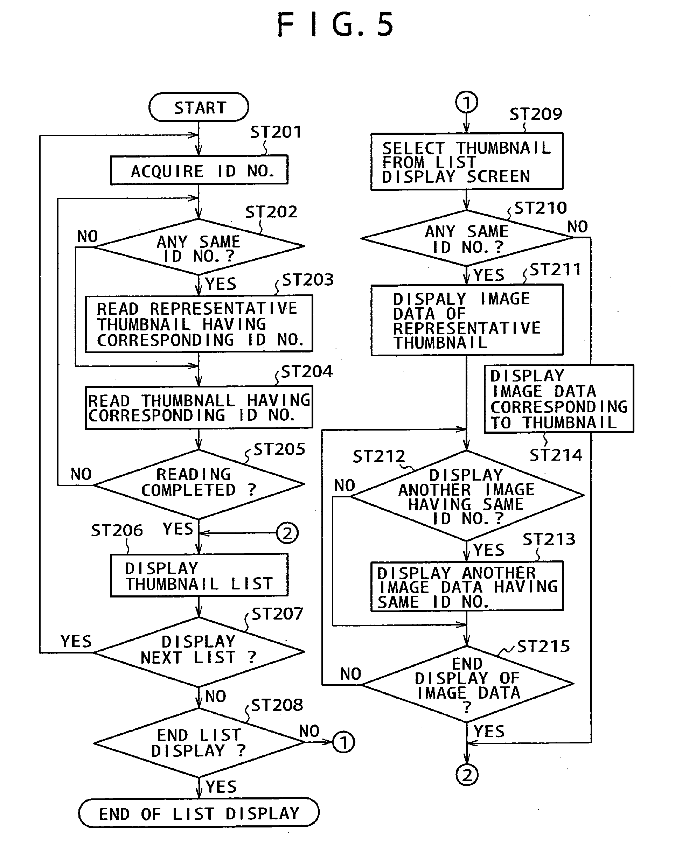

Next, referring to a flowchart of FIG. 5, a specific operation will be described, which is performed to inspect and/or search data recorded on the recording medium 181.

When a predetermined operation for inspecting and/or searching using an operation switch 162 of the operation unit 160 is performed by a user, the media drive 180 reads the ID numbers of thumbnails recorded on the recording medium 181, for storage in the memory unit 150 in accordance with a control signal from the CPU 140 (ST201) .

The media drive 180 sequentially reads a predetermined number of thumbnails displayable in a list form based on the order of the ID numbers of the thumbnails stored in the memory unit 150, for supply to the signal processing unit 120 in accordance with a control signal from the CPU 140.

At this time, the CPU 140 identifies the ID number of each of the thumbnails, and determines whether or not there is any ID number that is the same as the one identified (ST202).

If the same ID number is found, the media drive 180 reads only one representing thumbnail (hereinafter, representative thumbnail) from the thumbnails having the corresponding same ID number, for supply to the signal processing unit 120 (ST202 → ST203).

For example, in the case of the thumbnails of successively taken image data, the media drive 180 reads the thumbnail of image data that is recorded earliest on the recording medium 181 as their representative thumbnail.

If there is not the same ID number, the media drive 180 reads the thumbnail having the corresponding ID number from the recording medium 181, for supply to the signal processing unit 120 (ST202 → ST204).

After the thumbnails are read, the CPU 140 determines whether or not the reading of a predetermined number of thumbnails (the number of thumbnails displayable in a list form on the LCD display panel 132) from the recording medium 181 is completed.

And until the predetermined number of thumbnails is read from the recording medium 181, the above-mentioned steps ST202 to ST205 are repeatedly performed (ST205 → ST202 → ... → ST205).

When the reading of the predetermined number of thumbnails is completed, the CPU 140 supplies a control signal to the signal processing unit 120, and the signal processing unit 120 generates list screen data in which the read thumbnails are arranged so as to be displayable in a list form, for supply to the display unit 130 (ST205 → ST206).

At this time, the signal processing unit 120 generates the list screen data by performing a predetermined graphic process on the representative thumbnail so that the representative thumbnail can be visually recognized as such at a glance when displayed on the LCD display panel 132, for supply to the display unit 130.

In the display unit 130, the RGB decoder 131 converts the list screen data supplied from the signal processing unit 120 for supply to the LCD display panel 132, whereby a thumbnail list screen is displayed on the LCD display panel 132 (ST206).

When an operation for displaying a next thumbnail list screen is performed by the user, the process returns to the above-mentioned step ST201 to perform the processing of the steps ST201 to ST206 again (ST207 → ST201 → ...).

On the other hand, if the next thumbnail list screen is not to be displayed, or if the thumbnail list screen is to be closed, display of the thumbnail list screen on the LCD display panel 132 is brought to an end by performing a predetermined display end operation (ST207 → ST208 → End).

Further, the user can select a desired thumbnail from the thumbnail list screen displayed on the LCD display panel 132 to display the corresponding image data (ST207 → ST208 → ST209).

When a thumbnail is selected from the thumbnail list screen by the user, the CPU 140 determines whether or not there is an ID number that is the same as that of the selected thumbnail (ST210).

If there is the same ID number, i.e., if the representative thumbnail is selected, the CPU 140 supplies a control signal to the signal processing unit 120 and the media drive 180, and the media drive 180 reads the image data from the recording medium 181 based on the ID number of the representative thumbnail for supply to the signal processing unit 120, and the signal processing unit 120 performs a predetermined signal process on the read image data for supply to the display unit 130.

In the display unit 130, the RGB decoder 131 converts the image data supplied from the signal processing unit 120 for supply to the LCD display panel 132, whereby the image data corresponding to the representative thumbnail is displayed on the LCD display panel 132 (ST210 → ST211).

If there is still another image data to which the same ID number is added, the user makes a selection as to whether or not this image data should be displayed (ST212).

In case of displaying another image data to which the same ID number is added, the CPU 140 supplies a control signal to the signal processing unit 120 and the media drive 180, and the media drive 180 reads such another image data from the recording medium 181 under the same ID number for supply to the signal processing unit 120, and the signal processing unit 120 performs the predetermined process on such another image data having the same ID number for supply to the display unit 130, whereby the image data is displayed on the LCD display panel 132 (ST212 → ST213).

Furthermore, if there is yet another image data under the same ID number, the user performs an operation to return the process to the above-mentioned step ST212 to perform the processing of the steps ST212 to ST215, whereby display of such another image data is performed repeatedly under the same ID number (ST213 → ST215 → ST212 → ...).

Note that the order in which image data having the same ID number are read is decided based on, e.g., the time sequence at which each of the image data is recorded on the recording medium.

Further, if there is no other image data having the same ID number, or if the image data is not to be displayed, the predetermined display end operation is performed to end the display of the image data, whereby the thumbnail list screen that is displayed before the thumbnail is selected is displayed (ST215 → ST206 → ...).

On the other hand, if the same ID number is not found in the processing of the above-mentioned step ST210, i.e., if a thumbnail, the ID number of which is not the same as those of the other thumbnails, is selected, the CPU 140 supplies a control signal to the signal processing unit 120 and the media drive 180, and the media drive 180 reads image data from the recording medium 181 based on the corresponding ID number of the thumbnail for supply to the signal processing unit 120. And the signal processing unit 120 performs a predetermined signal process on the read image data for supply to the display unit 130 (ST210 → ST214).

In the display unit 130, the RGB decoder 131 converts the image data supplied from the signal processing unit 120 for supply to the LCD display panel 132, whereby the image data corresponding to the thumbnail is displayed on the LCD display panel 132 (ST214).

And when the predetermined display end operation is performed to end the display of the image data, the thumbnail list screen that is displayed before the thumbnail is selected is displayed (ST214 → ST206 → ...).

Successively, a thumbnail list screen will be described, which is displayed to inspect and/or search data recorded on a recording medium based on the flowchart of FIG. 5.

In case of inspecting and/or searching data recorded on a recording medium using the conventional image taking apparatus, e.g., of inspecting and/or searching data from a recording medium on which image data and their thumbnails are recorded as serial numbers "1" to "45" such as shown in FIG. 3 mentioned above based on a predetermined order of, e.g., imaged dates and times or file names, a predetermined number (9, for example) of thumbnails are read from the recording medium 181 in the order of "1" to "45".

A thumbnail list screen composed of the predetermined number (that is 9) of thumbnails read from the recording medium is generated and displayed on the LCD display panel 132 (see FIG. 3 (a)). And when a screen switching operation is performed, screen display switches in the order of (a) → (b) → (c) → (d) → (e) in FIG. 3, allowing the user to inspect and/or search all the data (thumbnails).

Further, when the user selects a desired thumbnail from the thumbnails displayed in the thumbnail list screens in (a) to (e) of FIG. 3, image data corresponding to the selected thumbnail is read from the recording medium 181 for display on the LCD display panel 132.

For example, to search the image data (thumbnail) numbered "44" of FIG. 3, the thumbnail corresponding to the desired image data is not displayed unless the user performs the thumbnail list screen switching operation four times in the order of (a) → (b) → (c) → (d) → (e) of FIG. 3.

On the other hand, in the image taking apparatus 100 of the present invention, when image data is to be recorded on the recording medium 181, the image data to be captured when specific setting information is configured or when a specific operation is performed, and their thumbnails are recorded on a recording medium 181 with the same ID number added thereto, based on the setting information, and thus when data recorded on this recording medium 181 is to be inspected and/or searched, a predetermined number of thumbnails are read in the order based on the ID numbers to generate a thumbnail list screen for display on the LCD display panel 132.

At this time, if there are thumbnails having the same ID number, only one thumbnail corresponding to, e.g., the earliest recorded image data is read from those thumbnails having the same ID number as the representative thumbnail, and a thumbnail list screen is generated by performing a graphic process such that the user is informed that there is image data associated with this representative thumbnail, and displayed on the LCD display panel 132.

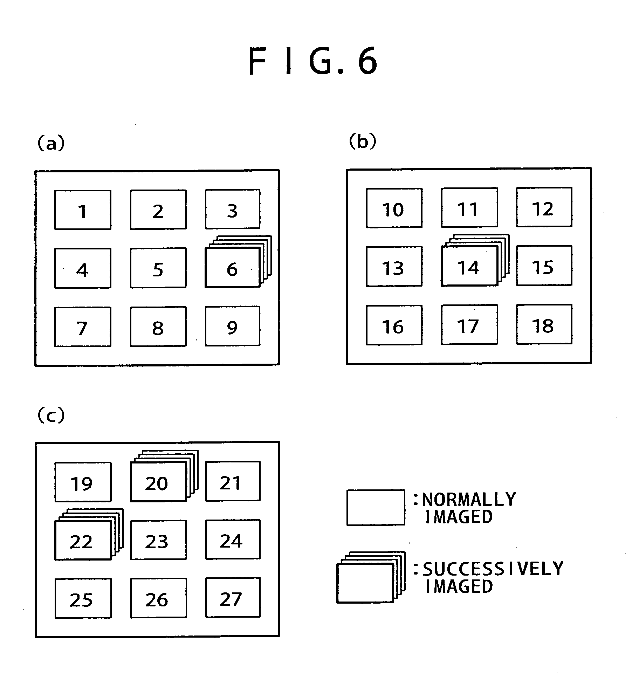

For example, to inspect and/or search data recorded on a recording medium with such ID numbers as shown in FIG. 4 mentioned above added thereto, a predetermined number (9, for example) of thumbnails are read from the recording medium 181 according to the ID numbers "1" to "27" added to the respective thumbnails, and as shown in (a) of FIG. 6, a thumbnail list screen composed of thumbnails having ID numbers "1" to "9" is generated and displayed on the LCD display panel 132.

At this time, as to the ID number "6", the thumbnail of the earliest recorded image data is read from the thumbnails numbered "6" to "12" of FIG. 3; i.e., only the thumbnail corresponding to the number "6" of FIG. 3 is read from the recording medium 181 as the representative thumbnail.

And a thumbnail list screen is generated and displayed on the LCD display panel 132, in which this representative thumbnail is subjected to a predetermined graphic process that differs from that to which the other thumbnails (having the ID numbers "1" to "5" and "7" to "9" in (a) of FIG. 6) are subjected, such that the representative thumbnail can be visually recognized as being associated with the other successively taken image data (corresponding to the numbers "7" to "12" of FIG. 3).

And when a thumbnail list screen switching operation is performed, the thumbnail list screen composed of the predetermined number (9, for example) of thumbnails read in the order of the ID numbers "1" to "27" is displayed in the order of (a) → (b) → (c) in FIG. 6, whereby the user can inspect and/or search all the data.

Note that similarly to the thumbnails having the ID number "6" in (a) of FIG. 6 , as to the thumbnails having the ID number "14" in (b) of FIG. 6 and the thumbnails having the ID numbers "20" and "22" in (c) of FIG. 6 , their representative thumbnails are read, and subjected to the predetermined graphic process.

And when the user selects a desired thumbnail from the thumbnails displayed in the respective list screens (a) to (c) of FIG. 6, image data having the same ID number is read from the recording medium, based on the ID number of the selected thumbnail for display on screen.

For example, the thumbnail having the ID number "26" in (e) of FIG. 4 corresponds to the thumbnail numbered "44" in (e) of FIG. 3. To search this thumbnail having ID number "26", a user needs to perform a thumbnail list screen switching operation only twice in the order of (a) → (b) → (c) in FIG. 6.

Further, when a representative thumbnail such as the thumbnail having the ID number "6" in (a) of FIG. 6 is selected, first, image data corresponding to the representative thumbnail (image data corresponding to the thumbnail numbered "6" in (a) of FIG. 3) is read from the recording medium for display on screen.

Furthermore, by performing a predetermined operation, image data to which the same ID number as that of the representative thumbnail is added are read in the order of, e.g., their being recorded on the recording medium 181 for display on screen. For example, the respective image data are read and displayed on screen every time the predetermined operation is performed, in the order of "6" → "7" → "8" → ... "12" in (a) of FIG. 3.

In this way, when there are thumbnails to which the same ID number is added, only one representing thumbnail (representative thumbnail) is read therefrom, and this representative thumbnail is subjected to a predetermined graphic process for display on screen, whereby its visibility and operability during inspecting and/or searching can be improved.

## Claims

1. An image taking apparatus comprising:
thumbnail generating means for generating thumbnails that are size-reduced image data created in accordance with image data captured via imaging means;
identifier setting means for setting identifier information added to associate the thumbnails generated by the thumbnail generating means with the image data;
identifier information adding means for adding identifier information capable of determining the image data and the thumbnails as obtained under the same setting to the image data captured when specific setting information is configured and to the thumbnails based on the setting information of the image taking apparatus, when the identifier information configured by the identifier setting means is to be added to the image data and the thumbnails generated by the thumbnail generating means;
data recording means for recording the image data and the thumbnails to which the identifier information is added, on a recording medium;
data reading means for reading by selecting only a thumbnail that is based on a predetermined condition from the thumbnails to which such identifier information as to determine the image data and the thumbnails as obtained under the same setting is added, when the thumbnails are read from the recording medium; and
screen display means for generating thumbnail list screen data from a predetermined number of thumbnails read by the data reading means, for display on a screen.

2. The image taking apparatus according to claim 1, wherein;
said screen display means generates the thumbnail list screen data by performing a predetermined graphic process only on the thumbnail read by selection by the data reading means.

3. The image taking apparatus according to claim 1 or 2, wherein;
said identifier adding means adds such identifier information capable of determining the image data and the thumbnails as obtained under the same setting to the image data captured when a successive still picture imaging function or an auto-bracket function is set as the specific setting information and to the thumbnails.

4. The image taking apparatus according to claim 1, 2 or 3, wherein;
said identifier information adding means adds such identifier information capable of determining the image data and the thumbnails as obtained under the same setting to the image data captured when a specific one of imaging mode information items that are defined according to predetermined imaging conditions is set as the specific setting information and to the generated thumbnails.

5. The image taking apparatus according to any one of claims 1 to 4, wherein;
said identifier adding means adds such identifier information capable of determining the image data and the thumbnails as obtained under the same setting to the image data captured from the turning on to the turning off of a specific operation switch when information indicating that the specific operation switch is designated is set as the specific setting information and to the generated thumbnails.

6. An image taking method comprising steps of:
generating thumbnails that are size-reduced image data created in accordance with image data captured via imaging means;
setting identifier information added to associate the thumbnails generated by the step of generating the thumbnails with the image data;
adding identifier information capable of determining the image data and the thumbnails as obtained under the same setting to the image data captured when specific setting information is configured and to the thumbnails based on the setting information of an image taking apparatus, when the identifier information configured by the identifier setting means is to be added to the image data and the thumbnails generated by the step of generating the thumbnails;
recording the image data and the thumbnails to which the identifier information is added, on a recording medium;
reading by selecting only a thumbnail that is based on a predetermined condition from the thumbnails to which such identifier information as to determine the image data and the thumbnails as obtained under the same setting is added, when the thumbnails are read from the recording medium; and
generating thumbnail list screen data from a predetermined number of thumbnails read by the step of reading the thumbnail, for display on a screen.
